# EUROPEAN PATENT SPECIFICATION

(11) **EP 3 137 400 B1**
(45) Date of publication and mention of the grant of the patent: **09.10.2024**
(21) Application number: 15707563.1
(22) Date of filing: 10.02.2015
(51) Int. Cl.: B65G 61/00, B65G 1/137

(54) **INTERMEDIATE HOLDING FACILITY FOR PICKING STATION**
ZWISCHENPRODUKTHALTEANLAGE FÜR KOMMISIONIERSTATION
INSTALLATION DE STOCKAGE INTERMÉDIAIRE POUR POSTE DE PRÉPARATION DE COMMANDES

(30) Priority: 10.02.2014 GB 201402263
(43) Date of publication of application: 08.03.2017
(73) Proprietor: Ocado Innovation Limited, Hatfield, Hertfordshire AL10 9UL (GB)
(72) Inventor: LINDBO, Lars Sverker Ture, Hatfield Hertfordshire AL10 9NE (GB); STADIE, Robert Rolf, Hatfield Hertfordshire AL10 9NE (GB); CLARKE, Paul, Hatfield Hertfordshire AL10 9NE (GB)
(74) Representative: Ocado Group IP Department
(86) International application number: PCT/EP2015/052774
(87) International publication number: WO 2015/118171

(56) References cited:
- EP-A1- 2 520 524
- EP-A1- 2 650 237
- WO-A1-2008/067964
- WO-A1-2010/022832
- DE-A1- 102011 053 547
- US-A1- 2013 110 280
- US-A1- 2014 244 026

## Description

This application claims priority to UK Patent Application 1402263.6 filed on February 10, 2014.

The disclosure herein relates to systems and methods for handling items processed by at least partially-automated storage and retrieval systems. In particular, the disclosure provides improved systems and methods for order picking.

Various forms of both fully- and semi-automated order processing and fulfillment systems are known. They, and the various components they comprise, may take many forms.

In some forms of goods-to-man picking systems, for example, bins or other containers containing inventory and/or other items may be stored within a fully- or semi-automated storage and retrieval system, and retrieved therefrom for provision to one or more picking stations, in order to facilitate picking of items from storage containers to intermediate or final delivery containers at manual or automated picking stations. Items picked from storage containers may be placed into delivery containers, which are typically of different type(s) than those used to store items, and which are provided by systems or other sources outside the storage system.

There is need, however, for improvement in the efficiency of systems and processes for storing and retrieving containers in such systems.

Fully- and semi-automatic goods storage and retrieval systems, various aspects of which may sometimes be referred to as "order fulfillment," "storage and retrieval," and/or "order picking" systems, can be implemented in a wide variety of types and forms. One manner of providing access to goods stored for fully- and/or semi-automatic retrieval, for example, comprises placement of goods, which may be of any desired type(s), in bins, moveable shelf structures or other containers (hereinafter referred to generically as containers), and stacking and/or otherwise disposing the containers in racking, horizontally on a floor or vertically in layers, such that individual containers may be accessible by wholly or partially-automated container retrieval systems.

Upon receipt of an order from a customer for multiple items stored in a storage and retrieval system, fully or semi-automated container handlers may retrieve storage containers containing relevant items from a grid, racking, or other ordered arrangement of storage containers, and deliver them to fully or semi-automated picking stations. At the picking stations, items may be removed from the storage containers and placed in an intermediate holding facility before being picked into delivery containers. EP 2 650 237 A1 discloses a method of handling items at a picking station according to the preamble of claim 1. WO2008067964 A1 discloses a system comprising multiple pick stations according to the preamble of claim 12. US 2013/110280 A1, EP 2 520 524 A1 and DE 10 2011 053547 A1 disclose additional picking systems and methods.

According to the invention as defined in claim 1 there is provided a method of handling items in at least a semi-automated order fulfillment system comprising a holding facility, the method comprising: picking at least one item from at least one source container to the holding facility, the source container configured for holding a plurality of items and for storage in a storage-and-retrieval system; and picking the at least one item from the holding facility to a destination container; characterised in that the the at least one item picked from the at least one source container to the holding facility comprises an item for a destination container located remote from the holding facility at the time the at least one item is picked to the holding facility.

According to the invention as defined in claim 12 there is provided a system comprising multiple pickings stations from which one picking station comprises: a holding facility; a robot configured to pick items from a source container to the holding facility; and the same or a different robot configured to pick items from the holding facility to a destination container characterised in that the items picked from the source container to the holding facility comprise items for a destination container located remotely from the holding facility at the time the items are picked to the holding facility.

In various aspects, the disclosure provides systems, methods and logic structures such as coded, machine-executable instruction sets suitable for use in implementing such staged order picking / packing methods. Control of such fully and/or semi-automatic order picking systems, and particularly of such robotic load handlers, can be accomplished through the use of various forms and combinations of suitably configured sensors, controller mechanism(s), and processor(s) operating according to programmed control logic in the form or software, firmware, etc.

In various aspects, the disclosure herein provides methods, systems, and corresponding machine-executable coded instruction sets for handling of goods in at least a semi-automated order fulfillment system comprising a holding facility. In various aspects, the disclosure provides improvements in the handling of goods in fulfillment of orders which, in some instances, may include a variety of items having different sizes, weights, fragilities and other characteristics.

In the same and other aspects, the disclosure provides systems, methods and coded instruction sets for picking items, from the intermediate holding facility and/or source containers, to a destination bin in a defined sequence. In some examples, this sequence may be based on one or more characteristics associated with the items to be picked.

In various embodiments of the above and other aspects, such a holding facility can include one or more storage apparatuses. According to the invention, at least a portion of the holding facility may be configured to move dynamically.

In the same or other embodiments, the holding facility may be shared between two or more picking stations.

In the same or other embodiments, the disclosure provides systems, methods and coded instruction sets wherein a second source bin can be moved into position for picking into the holding facility while one or more items are being picked from the holding facility to the destination bin. In the same or other embodiments, a second destination bin can be moved into position for receiving items while one or more items are being picked to the holding facility from a source bin.

The invention is illustrated in the figures of the accompanying drawings, which are meant to be exemplary and not limiting, and in which like references are intended to refer to like or corresponding parts.
Figure 1 is a schematic block diagram illustrating processes and systems to which aspects of the invention can be applied.
Figures 2-4 are schematic diagrams showing aspects of embodiment(s) of picking station(s) suitable for use in implementing aspects of the invention.
Figure 5 and 6 are flowcharts showing example methods in accordance with aspects of the invention.
Figure 7 is a schematic block diagram illustrating example systems described below.

Preferred embodiments of methods, systems, and apparatus suitable for use in implementing the invention are described through reference to the drawings.

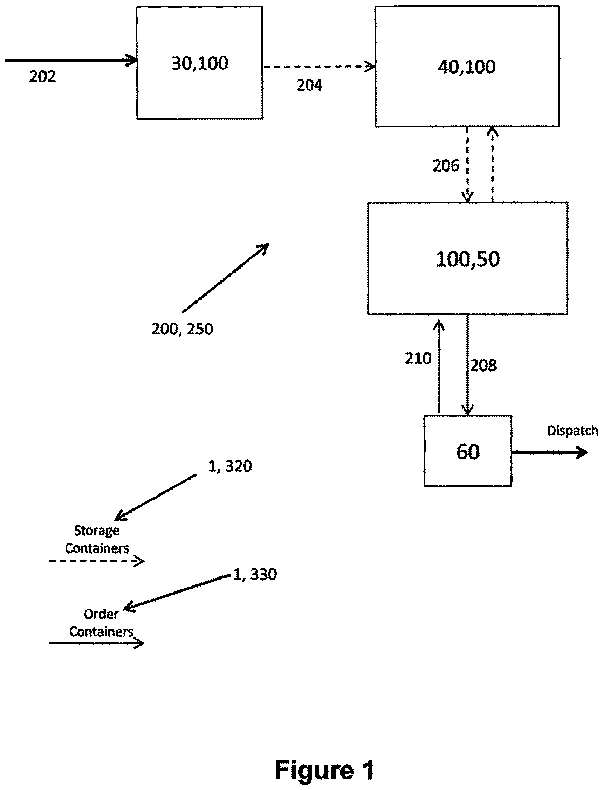

One of the most significant applications of storage and retrieval systems in accordance with the invention is in the fully or semi-automated processing of orders, as for example through their use as components 40 of automated order fulfillment systems such as that shown in Figure 1.

In a typical commodities picking operation adapted for handling a large variety of items, such as a grocery order processing system, it is sometimes found that a wide range of item sizes, shapes, weights, and other characteristics must be handled or otherwise accommodated, and that some portion(s) of the items to be sorted, stored, delivered, and/or otherwise handled may require special handling or specific picking orders. For example, it may be desirable to pack fragile or crushable items on top of heavier or studier items, or to pack frozen or chilled products in close proximity to each other and away from products which may be damaged by cold temperatures. These are nonlimiting examples, and any other packing orders, arrangements or considerations may be implemented.

In the example embodiment shown in Figure 1, an order fulfillment system 250 comprises one or more restocking systems 30; storage and retrieval systems 40; order picking systems 50; and dispatch facilities 60. As will be understood by those skilled in the relevant arts, various components of order processing system(s) 250 and process(es) 200 suitable for use in implementing the disclosure herein can be configured in a wide variety of ways, using many different types of devices and processes, in various combinations. Various types of sorting, storage, picking, delivering, and/or other item handling systems and processes can be used, for example. Moreover, such systems and processes may be used for the sorting, storage, and delivery of any type(s) of commodities, including for example groceries and/or other office, household and consumer items.

In order fulfillment systems such as that shown at 250 in Figure 1, individual containers stored within the storage and retrieval system 40 can contain one or more items, which may be identical. To pick an order including different items, it is often necessary to retrieve items from multiple source containers. Such containers can be retrieved from the storage and retrieval system 40 and brought to a desired order picking system 50. In some examples, one or more source containers may sit idle at an order picking station while they wait for their contents to be picked to a destination container. Idle containers can, in some examples, be required at another picking station or may be occupying one of a limited number of container slots at the picking station which cannot be replaced by a new container for the same or subsequent order. This idling time may be exacerbated by orders requiring a prescribed picking sequence.

It can be advantageous to pick items from one or more source containers to a holding facility from which they are subsequently picked into a delivery or destination container, or into an intermediate holding/sorting container. Once required or anticipated items are pre-picked to the holding facility, the source container(s) can be moved before the items are ultimately picked into a destination container. In some examples, this can improve the efficiency of the storage and retrieval system substantially, shorten wait times for other orders or picking stations requiring a particular source container, and/or can free up a source container slot at the picking station which can be filled by a subsequent source container. Resultant increases in efficiency can be significant, especially in applications where the number of items per order is high and there is a significant amount of products which are present in a large proportion of orders. An example of one such application is grocery retail.

Similarly, it can be advantageous to be picking items from source container(s) to a holding facility while destination container(s) at a picking station are being replaced. In some examples, this can further shorten idling times for the picker(s), picking robot(s) and/or source or destination container(s).

In some fully- or semi-automated systems, robotic picking devices may have limitations when handling or maneuvering products, so in some examples, the importance of the packing sequence may be heightened. Accordingly, in some situations, it may be advantageous to be able to complete an entire pick at a single picking station.

In relatively broad aspects, the present disclosure relates to any staged system(s) or process(s) whereby a holding facility is used to improve or simplify the fulfillment of orders in which a variety of items are packed.

Principles of the invention may be applied with particular advantage to the semi- and/or fully-automated fulfillment of orders. Such orders can, for example, include orders entered via the Internet and/or other public and private communications networks.

It is also to be understood that while various aspects of the process(es) and system(s) shown in Fig. 1 are illustrated using separate functional or schematic boxes, in various embodiments, physical, logical, and other aspects of the system(s) 250 and function(s) 200 depicted can be combined or otherwise shared in a wide variety of forms.

Restocking station(s) 30 and associated process(es), can for example provide any aspect(s) of order processing system(s) 250 that enable pallets and/or other multipacks of inbound items to be separated and placed, individually or in groups, into separate containers for storage in a grid-based or other type of storage and retrieval system(s) 40. Such processes can be performed using any suitably-configured fully or semi-automated system(s), using for example various type(s) of conveyors, trolleys, robotic devices, etc., and/or can be performed manually by human workers. In various embodiments, a restocking station 30 can include single or plural pick stations wherein one or more palletized item sets are picked and placed into initially empty or partly filled containers.

Storage and retrieval (sub)system(s) 40 can include any machine(s), device(s), infrastructure or arrangement(s) suitable for automatically and/or manually storing and retrieving containers containing one or more items in accordance with the disclosure herein.

Order picking station(s) 50 can include any types or forms of system(s) suitable for receiving containers of items retrieved by storage and retrieval system(s) 40, and enabling picking of items therefrom. Such system(s) can, for example, include various types and form of conveyor systems, wherein containers 1 can be loaded on conveyor(s) for transport to picking areas, for automated and/or manual removal of items and to be placed in delivery or other order-assembly.

Aspects of storage and retrieval system(s) 30, 40, 50 in accordance with the invention can be implemented using components provided by manufacturers such as Autostore^{RTM}, Cimcorp^{RTM}, Knapp OSR^{RTM} and others.

An example of operation of a system 250 can be described through reference to Figures 1-5. At 202, palletized or other batches of items arrive at a restocking station 30. For example, pallet(s) items may be removed from a truck or other means of conveyance at an order processing / fulfillment center, and be wheeled into one or more restocking station(s) 30 comprising tables, conveyors, trolleys, etc. for holding a plurality of bins or containers 1. Upon removal or opening of any packaging, at station 30, one or more product(s) may be into bins 1 or other containers.

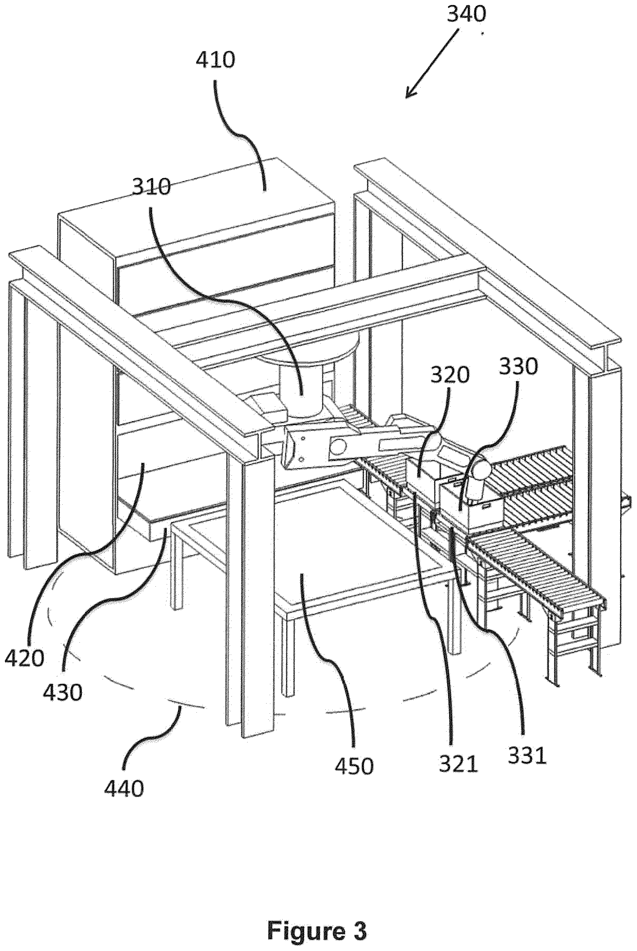

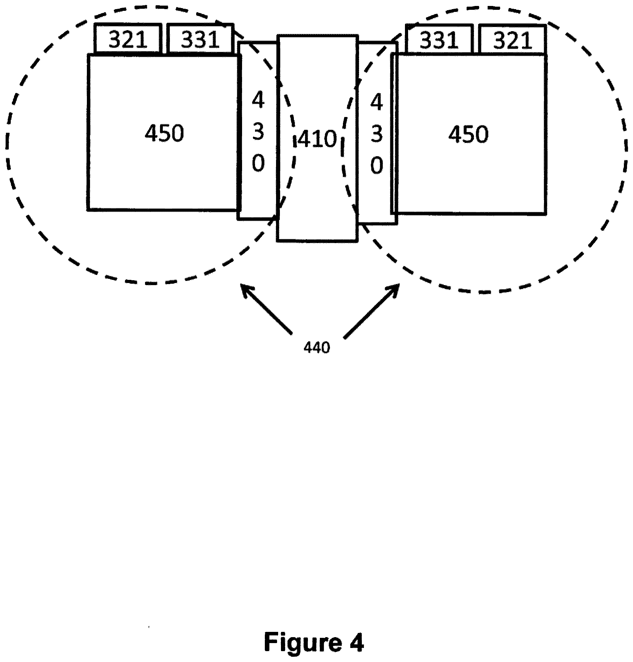

As any desired stocking of containers 1 is completed, at 204 the containers may be transferred to storage in a storage and retrieval system 40, as for example by conveyor (Figures 3 and 4), and stored therein until needed for fulfillment of an order.

When it is subsequently determined that a container 1 containing one or more items is needed for further order fulfillment processes, at 206 that container 1 may be retrieved from the storage and retrieval system 40 and delivered to an order picking station 50. For example, a container 1 identified as needed, or otherwise desired, for fulfilling an order may be retrieved from a storage point and transported to an order picking station 50.

At the order picking station 50 or other related-purpose area, items may be removed form retrieved container(s) 1, placed into intermediate holding facility(ies) or order/delivery container(s), and otherwise readied for delivery as necessary.

At 208, packed containers 1, or sets thereof comprising parts or entireties of picked orders may be transported, via conveyor, forklift, or other means, to a vehicle loading or other delivery point 60, for dispatch to any ordering customer(s). For example, in a system 250 comprising a picking station, container(s) 1 that have been filled with all desired items may be moved by the picker onto a conveyor or other device, for delivery to a dispatch facility 60 or other desired location.

At dispatch facility 60, packed containers 1 associated with one or more assembled orders may be sorted and delivered to transport means, such as trucks, or otherwise delivered to, or made ready for delivery to, customer(s) or other agents associated with the order(s). It should be understood that providing a container for dispatch can include queuing or otherwise identifying the container as being ready for shipment, and does not necessarily include the actual loading or shipment of the container. Principles of the invention may be applied with particular advantage to the semi- and/or fully-automated acceptance and fulfillment of orders. Such orders can, for example, include orders entered via the Internet and/or other public and private communications networks.

As noted above, in a typical commodities picking operation adapted for handling a large variety of items, such as a grocery order processing system, storage and retrieval systems 40 may be implemented to handle wide ranges and quantities of items. Such systems may be implemented using a large range of technologies, such as miniload systems, shuttle systems, vertical or horizontal carousel systems or grid based systems.

Operation of embodiments of order picking systems 50 including holding facility(ies) in accordance with various aspects of the present disclosure may be explained through reference to the examples illustrated in Figures 3-6.

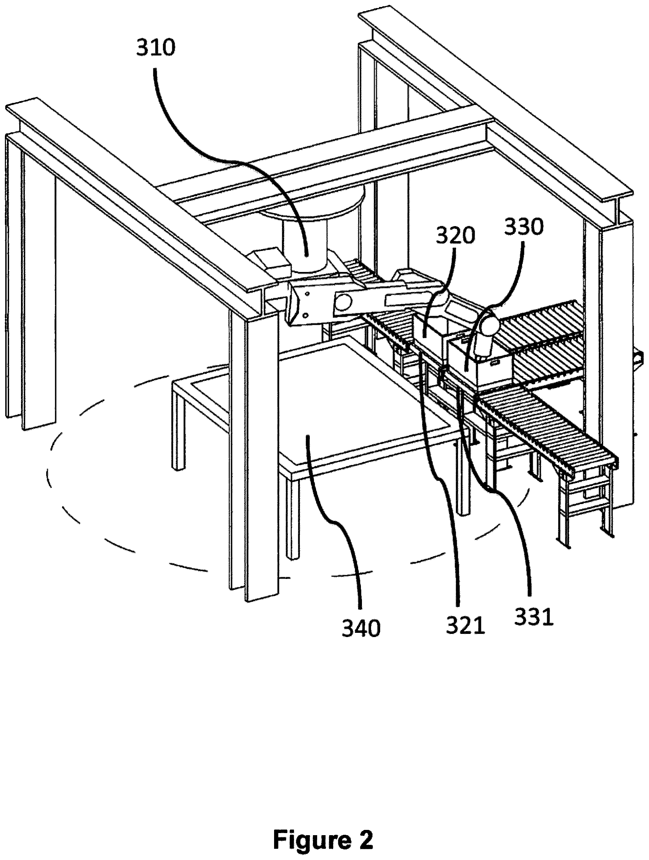

Figure 2 shows aspects of an example picking station 50, 100 (Fig. 1) which includes a source container location 321 currently occupied by a source container 320, a destination container location 331 currently occupied by a destination container 330, a robotic picker 310, and a holding facility 340.

In some examples, source and/or destination containers can be brought to/from the picking station/cell by any (semi-)automated and/or manual mechanism or process. In the example picking station illustrated in Fig. 2, the source and/or destination containers are transported to/from the picking station 50, 100 by conveyors. However, in other examples, any other and/or any number of different transport mechanisms may be used.

A robotic picker 310 suitable for use in implementing the invention can include any device(s) suitable for picking items from one or more source containers 320 to one or more holding facilities 340 and/or for picking items from such holding facility(ies) 340 to destination containers 330. In various embodiments, multiple robotic pickers 310 can be used. For example one or more robotic pickers 310 may be used to pick items from a source container 320 to the holding facility 340, and one or more different robotic pickers 310 may be used to pick items from the holding facility 340 to a destination container 330.

Robotic picker(s) 310 can include any kind(s) of material handling robot(s) including, but not limited to, commercially available types such as 6- or 7-axis robots, SCARA (Selective Compliance Assembly Robot Arm) robots, delta robots, and Gantry robots.

Such robotic pickers 310 can have single or multiple gripping mechanisms. In some examples, the robotic picker can include multiple gripping mechanisms suitable for picking different types of items. A robotic picker with multiple gripping mechanisms may include a rotating wrist with a plurality of different gripping mechanisms. In some examples, a gripping mechanism on a robotic picker can be replaceable, removeable and/or otherwise interchangeable.

Picking can involve any combination of (semi-)automatic and/or manual systems. For example, picking from the source container 320 to the holding facility 340 and/or from the holding facility 340 to the destination container 330 may involve a human physically performing at least an aspect of the picking and/or controlling a device/mechanisms performing at least an aspect of the picking.

In some examples, a picking station 50, 100 can be arranged to allow a human picker to access the holding facility, and the source and destination containers and to pick items therebetween.

In some examples, different mechanisms can be involved in the picking from the source container 320 to the holding facility 340 and/or from the holding facility 340 to the destination container 330. For example, picking is not necessarily limited to moving an item directly from a container to the holding facility by a robotic picker. In some examples, at least an aspect of the picking can involve conveyors, slides, carousels, forklifts, trolleys, crossbelts, bomb bays, sorters or any other device suitable for moving and/or sorting one or more items from a source container to the holding facility and/or from the holding facility to a destination container.

While the example in Fig. 2 only shows a single source container location 321 and a single destination container location 331, in various embodiments picking station(s) 50, 100 can include any number of source container locations and any number of destination container locations. These locations can be in any suitable physical arrangement with respect to each other, the holding facility, picking devices, workspaces and/or personnel.

In the example, in Fig. 2, a single picking device 310, the source container location 321, the destination container location 331, and the holding facility 340 are positioned such that the picking device 310 can pick item(s) from the source container 320 to the holding facility 340 and from the holding facility 340 to the destination container 330. Other suitable physical arrangements are possible.

In some examples, the physical arrangement of a picking station can include arrangements for multiple source container and/or destination container locations, multiple holding facilities, and/or multiple pickers. In some examples, the physically arrangement of a picking station can utilize horizontal and vertical space.

The holding facility 340 can include any device, apparatus and/or area for holding items picked from a source container, but not yet picked to a destination container. The holding facility can include, but is not limited to, tables or other flat surfaces, shelves, hooks, arrays of apertures, storage apparatuses, intermediate bins or containers, slots, slides, and cubicles.

In some examples, the holding facility 340 includes dynamically moving devices/apparatuses such as crossbelts, rotating and/or sliding tables, moveable shelving, vertical load modules, and the like.

In some examples, the holding facility 340 can be dimensioned or otherwise designed to hold enough items for a defined picking period. For example, the holding facility may be designed to hold enough items to keep a picker or picking robot picking items from the holding facility to destination container(s) for 15 to 60 minutes. In some examples, this picking period may vary based on item characteristics such as size, temperature sensitivity, etc. In some examples, the holding facility can be configured to include different holding areas/apparatuses for different types of items. At least portions of the holding facility may be climate controlled.

The holding facility 340 can, in some examples, be configured to be accessed by multiple pickers and/or from multiple sides or directions. For example, a table may be open to be accessed from any number of sides, or a shelving apparatus may be open for access from two sides.

Fig. 3 shows aspects of another example picking station which includes a source container location 321 currently occupied by a source container 320, a destination container location 331 currently occupied by a destination container 330, a holding facility 340, and a robotic picker 310 which has a reach which encompasses the area indicated by the dotted circle 440.

In this example, the holding facility 340 includes a flat surface 450, a vertical load module 410 (VLM), a storage tray in presentation location 430 and an aperture 420 of the VLM.

In some examples, some or all aspects of a holding facility 340 may be shared by two or more adjacent or proximal picking stations/cells 440. Fig. 4 shows an example where two adjacent picking stations share a single vertical load module 410 and dynamic storage trays 430. In some examples, the reach 450 of different robotic pickers may overlap. In some examples, picking stations can share flat surfaces 450, picking devices/personnel, source container location(s) and/or destination container location(s).

As will be further understood by those skilled in the relevant arts, significant advantage may be realized through the full or partial automation of processes 200 described herein. Such automation may be implemented by, for example, providing automated controllers for load handlers 4, conveyors, and other components of systems 100, 30, 40, 50, etc. Such automation may be provided in any suitable manner, including for example the use of automatic data processors executing suitably-configured, coded, machine-readable instructions using a wide variety of devices, some of which are known and others of which will doubtless be developed hereafter. Processor(s) suitable for use in such implementations can comprise any one or more data processor(s), computer(s), and/or other system(s) or device(s), and necessary or desirable input/output, communications, control, operating system, and other devices, including software, that are suitable for accomplishing the purposes described herein. For example, a general-purpose data processor provided on one or more circuit boards may be configured to perform one or more of the processes described herein.

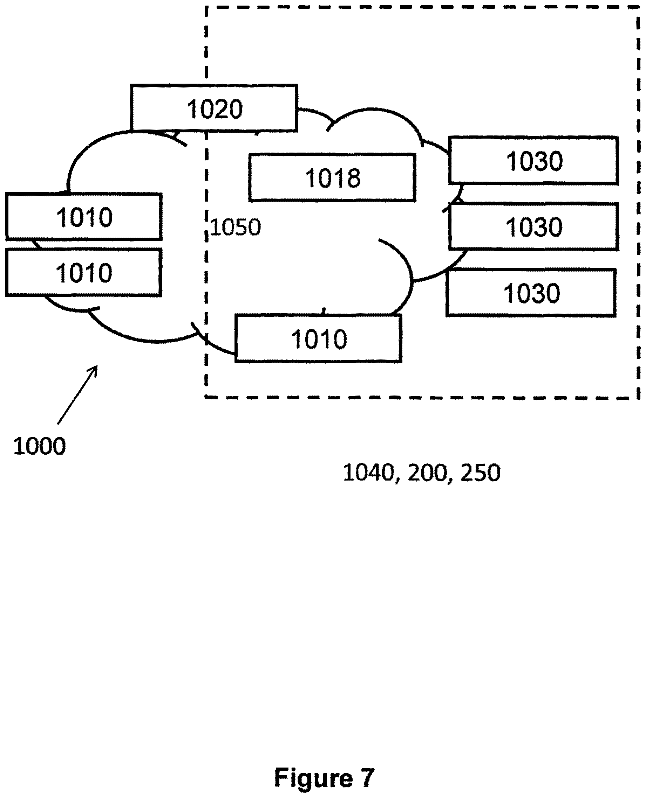

Fig. 7 shows an example system 1000 which may be suitable for implementing such an order processing system described below. In the example shown, system 1000 includes one or more order processing devices 1020 associated with an online, telephone, mail, and/or other in-person or remote order shopping system; one or more order processing systems 1040, 200, 250, one or more client devices 1010, one or more control systems 1030, one or more order processing devices 1020, and database(s) 1018.

Order processing device(s) 1020 can include any one or more of servers, general purpose computers, local and/or mobile computing devices, control systems, or any other suitable devices suitable for use in implementing system(s) and/or method(s) in accordance with this disclosure. Such device(s) 1020 can, for example, be implemented as centrally-operated enterprise servers, and/or as locally-implemented kiosk(s) or control devices at storage facilities such as those described herein.

An order processing device 1020 suitable for use in implementing the invention can include any one or more processor(s), memory(ies) and/or communication module(s) configured to perform the methods and operations described herein. Such order processing device(s) 1020 can be configured to receive and process data and/or other signals representing order(s) placed with a vendor.

Order item information, customer information, inventory information, item information, or any other information pertinent to the system 1000 may be stored in one or more datastores 1018 at one or more of the order processing device(s) 1020 or otherwise accessible to the order processing device(s) 1020 via one or more communication networks 1050 otherwise.

In some examples, order processing device(s) 1020 can be configured to receive, access, analyze, update, monitor, aggregate or otherwise utilize order information, inventory information, customer information, item information, and the like.

The client devices 1010 may be any electronic device capable of submitting order information to the order processing device(s)1 020 such as a personal computer, laptop, tablet computer, mobile phone, personal digital assistant, terminal at a retail location, terminal at an order processing facility or office associated with the retailed, an automated or semi-automated telephone device, and the like. The client device(s)
may be configured to communicate with the order processing device(s) 1020 via one or more communication network(s) 1050.

Communications means suitable for use in implementing systems in accordance with the invention can include any combination(s) of public, private networks and/or other communications devices or components. In some examples, the communications network(s) 150 can include any combination of wired, wireless or other networks and may span any desired and/or otherwise suitable number of service providers. Control system(s) 1030 can include one or more processor(s), memory device(s), and communication system(s)/device(s) for controlling any number of robots, conveyors, picking devices, and/or other mechanisms or devices at one or more aspects of one or more order processing system(s) 250. For example, the processor(s) can be configured to communicate with and/or control/instruct load handlers, conveyors, lifts and/or any other devices for transporting, storing and/or retrieving bins, pallets, items etc. to and from pallet storage 70, pick station(s) 30,100, 50, storage and retrieval system(s) 40, 100, order picking system(s) 100, 50, vehicle loading 60, and/or any other aspects of the system. The control system(s) 1030 can, in some examples, include wired and/or wireless communication networks for communicating with the various devices.

While illustrated as separate boxes in Fig. 7, the order processing device(s) 1020, control system(s) 1030, client device(s) 1010, database(s) 1018, and any other aspect of the system 1000 (illustrated or not) can be combined or distributed across any number of physical and/or logical locations, devices, and/or systems. For example, the example system(s) and/or method(s) described herein may be performed by a single system or device, or may be performed across multiple systems and/or devices. References to processor(s), device(s) and/or system(s) may applied or implemented by any processor, device and/or system within any device and/or system in the system as a whole 1000 irrespective of its physical or logical location.

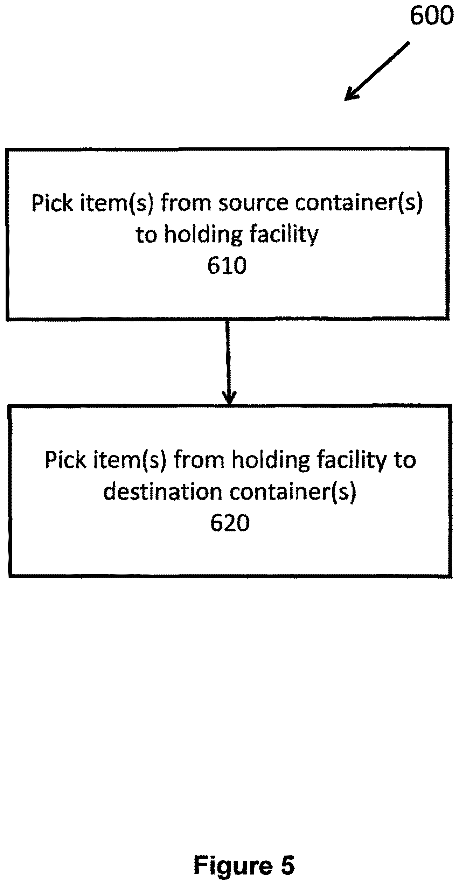

Fig. 5 is a flowchart showing aspects of an example method 600 of handling items in at least a semi-automated order fulfillment system comprising a holding facility.

At 610, one or more items are picked from one or more source containers to a holding facility.

At 620, one or more items are picked from the holding facility to one or more destination containers.

In some examples, at least one item from each of at least two source containers can be picked from the holding facility to a destination container in a defined sequence. This sequence can be defined based on at least one characteristic associated with at least one of the items to be picked to the destination container. In some examples, the sequence can be defined by the one or more processors at the order processing device(s) 1020 and/or control system(s) 1030, which can implement the sequence by controlling robotic picker(s) and/or by presenting visual, audio or other instructions via an output device such as display(s) or lights for human picker(s).

Characteristics associated with the items which may be considered by a processor(s) determination of a sequence can include but are not limited to size, weight, fragility, temperature sensitivity, etc.

Alternatively, in the same or other examples, the items, at 610, can be picked from the one or more source containers to the holding facility irrespective of the defined sequence for picking from the holding facility to the destination container.

In some examples, all order items to be picked to a destination container are picked from source container(s) to the holding facility before any of the order items are picked from the holding facility to the destination container.

In other examples, order items to be picked to a destination container are picked from source container(s) to the holding facility concurrently with the picking of order items picked from the holding facility to the destination container.

In some examples, while items for a destination container are being picked from the holding area, items for a different or subsequent destination container are concurrently picked from source container(s) to the holding area.

The picking of items to and from the holding facility can be performed in conjunction with the movement of source and destination containers into and out of source and destination container locations at a picking station/cell. For example, while one source container is being removed from a source container location and replaced by another, item(s) can be picked from the holding facility to destination container(s).

Similarly, while a destination container is being removed from a destination container location and replaced by another, item(s) can be picked from source container(s) to the holding facility.

In some examples, the picking from a source container to the holding facility and the picking from the holding facility to a destination container is performed by the same picking device(s). In other examples, these picking operations are performed by different picking device(s).

According to the invention at least a portion of a holding facility is shared between multiple pick stations. Hence an item, which is picked from a source container to the holding facility by a picker from a first pick station, can be picked from the holding facility to a destination container by a picker from a second pick station.

In broad embodiments, a holding facility can act as a buffer or intermediate storage for holding items which are required by current or upcoming orderfulfillments, orwhich may be anticipated for upcoming order fulfillments.

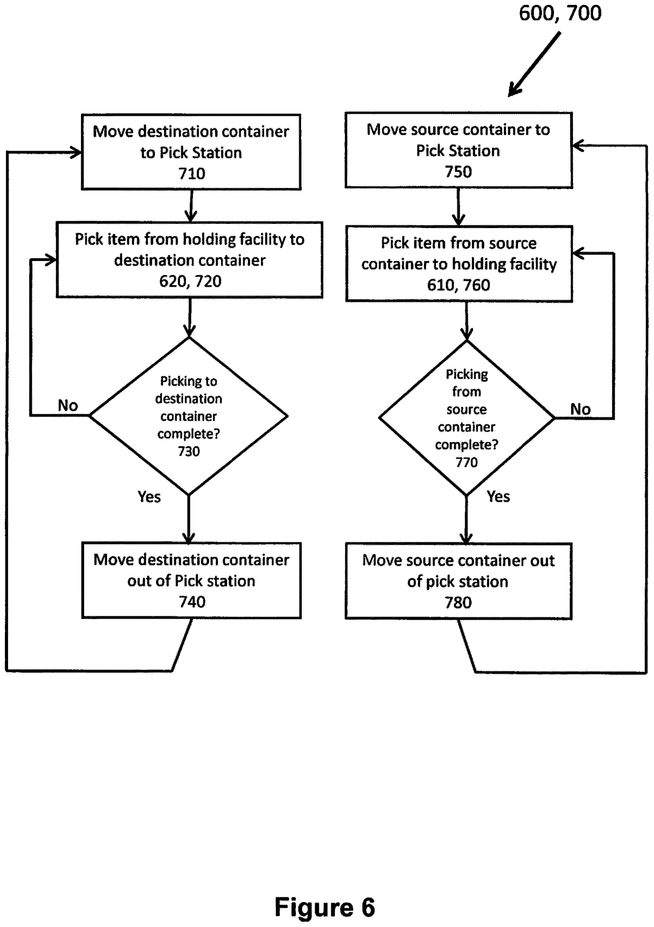

Fig. 6 shows a flowchart showing aspects of an example method 600, 700 of handling items in at least a semi-automated order fulfillment system comprising a holding facility.

At 710, a destination container can be moved to a picking station. At 720, 620, one or more items can be picked from the holding facility to the destination container at the picking station based on order requirements or otherwise. In some examples, items may also be picked directly from a source container to the destination container.

Picking continues until all items to be picked into the destination container at the picking station is complete. In some examples, picking is complete when an entire order or a portion of an order associated with the destination container has been picked.

Once the items assigned to be picked into the destination container have been picked 730, the destination container, at 740, is moved away from the picking station. The destination container may be moved, for example, to another area for preparation for dispatch, to storage, to another picking station for further picking or elsewhere.

At 750, a source container can be moved to a picking station. In some examples, the source container can be moved to fulfill an order currently being picked at the picking station; however, the source can be moved in advance or in anticipation of an order (or portion) to be picked at the picking station.

At 760, 610 one or more items can be picked from the source container to the holding facility. In some examples, item(s) may be picked directly from the source container to a destination container at the holding facility.

Once the item(s) to be picked from the source container have been picked 770, the source container can be moved 780 from the picking station. The source container may be moved, for example, to storage, to a restocking facility, to another picking station or elsewhere.

Picking items from a source container to a holding facility can include removing one or more items from a source container and placing them directly onto a holding facility area surface or apparatus. The source container can be configured to contain a plurality of typically identical or fungible items, and can be configured for storage in and retrieval from a storage-and-retrieval system.

In some embodiments, when picked into a holding facility, the items are not stored in a source container, nor are they stored in a destination container. In some embodiments, items picked into a holding facility are not stored in any other container other than a container which originates from the item's supplier and/or a container which is shipped to the customer as part of an end product.

The above example methods 600, 700 can be performed using with any of the example holding facilities, robots, other devices described herein, or otherwise.

In some examples, one or more an automated, semi-automated, or manual picker(s) (e.g. robot or human) at a picking station can be configured to switch back-and-forth between picking from source container(s) to the holding facility, and picking from the holding facility to destination container(s). In some examples, the ability to switch between these picking activities can reduce the idle time of picker(s) and in some instances, increase efficiencies.

As illustrated in Fig. 6, by picking items to and from a holding facility, item picking order and/or the movement of source and destination containers may, in some example, operate somewhat independently, which can in some instances lead to operational efficiencies, and increased order fulfillment throughput.

In some embodiments, a holding facility may be added to a traditional pick station where a picker picks all items from source containers to destination containers to fulfill order(s). Depending on order flows, frequency of items ordered, source container locations, size and space availability at the holding facility, etc., the percentage of items which are picked via the intermediate holding facility vs. those which are picked directed from a source container to a destination container may vary. In some instances, over 50% of items may be picked into a holding facility before being picked into a destination container. In other instances, 10% or fewer items may be picked into a holding facility before being picking into a destination container. Any other percentage may be possible depending on any of the aforementioned or other factors.

In some examples, the processor(s) may be configured to be more or less aggressive in use of the holding facility. In some examples, the processor(s) may dynamically adjust the percentage and/or number of items which are held/picked into the holding facility.

In some embodiments, one or more processors at the order processing device(s) 1020 and/or control system(s) 1030 can be configured to generate instructions to robotic picker(s) and/or storage-and-retrieval system device(s) and/or to communicate instructions to manual pickers using various heuristic or other algorithms based on future and/or past orders.

In some embodiments, the processor(s) can be configured to review upcoming orders in the fulfillment process to determine which items can be picked into the holding facility.

In some embodiments, the processor(s) can be configured to identify/select source container(s) for delivery to a pick station where one or more items contained in a source container can be picked into the intermediate holding facility. In some examples, the processor(s) can be configured to identify/select source container(s) to minimize idle time for various devices in the system. For example, if an overhead load handler or other device for retrieving a source container from a storage-and-retrieval system 40, 100 or elsewhere in the system 200, 250, is idle or will be idle at a future point in time, the processor(s) can generate instructions and/or can schedule the idle (or soon to be idle) device(s) to retrieve a source container which contains item(s) for fulfilling an order further ahead in the order queue. Although, a picker may not yet be ready to pick the item(s) from the source container into a destination container, the item(s) can be picked 610, 760 from the source container to the holding facility as described above. In some such instances, the system may allow for the reduction of idle time of various device(s)/robot(s) in the system.

In some embodiments, the processor(s) can be configured to generate instructions and/or schedule source container(s) which are already moving in the system to be moved to a pick station and to have item(s) picked into a holding facility. For example, if a source container is or will be returning from a first pick station or is otherwise in transit, the processor(s) may be configured to direct that source container to a second pick station for item(s) to be picked into a holding facility in anticipation of an upcoming order to be filled at the second pick station. In some such instances, this may increase the efficiency of the system and/or may reduce or eliminate the time/resource cost of storing the source container and then retrieving it again for an upcoming order fulfillment.

In systems where the storage-and-retrieval system may require the removal of a first source container in order to access a desired second source container (e.g. when containers are stacked), the system may be configured to direct the first source container to a pick station for item(s) to be picked into a holding facility in anticipation of an upcoming order. In some such instances, this may increase the efficiency of the system and/or may reduce inefficiencies associated with temporarily removing and re-storing a source container only for the purpose of accessing a second source container.

The processor(s) can be configured to opportunistically route or schedule source containers to pick stations for picking into holding facilities in any other situations, and/or any combination of the above-mentioned example scenarios.

Once a source container is moved 750 to the pick station, the processor(s) can be configured to continue with picking item(s) as described above with respect to references 610, 760 or otherwise.

In some examples, when a source container is at a pick station for fulfillment of an order currently being picked or otherwise, the processor(s), upon review of upcoming orders to be fulfilled at the pick station, may be configured to generate instructions to pick item(s) from the source container to the holding facility in anticipation of upcoming orders requiring the same item. In some such instances, this may eliminate the need to re-retrieve the source container from storage for upcoming orders, and/or may allow the source container to move on to a different pick station or to simply vacate a location at the pick station for other source containers.

In any of the examples described herein or otherwise, the processor(s) may be configured to generate instructions/schedule only certain types of items to be picked into a holding facility. For example, small, fragile, or environmentally sensitive (e.g. frozen foods) may not be suitable for storage in a holding facility.

While the disclosure has been provided and illustrated in connection with specific, presently-preferred embodiments, many variations and modifications may be made without departing from the invention as defined in the appended claims. The disclosure and invention(s) are therefore not to be limited to the exact components or details of methodology or construction set forth above but by the claims. Except to the extent necessary or inherent in the processes themselves, no particular order to steps or stages of methods or processes described in this disclosure, including the Figures, is intended or implied. In many cases the order of process steps may be varied without changing the purpose, effect, or import of the methods described. The scope of the invention is to be defined solely by the appended claims.

## Claims

1. A method of handling items, at a first picking station (50, 100), in at least a semi-automated order fulfillment system (250) comprising a holding facility (340), wherein at least a portion of the holding facility is configured to move dynamically, said first picking station comprising a robot configured to pick items from a source container (320) to the holding facility (340) and to pick items from the holding facility (340) to a destination container (330) the method comprising at least the steps of:
- picking by the robot of said first picking station of at least one item from at least one source container (320) to the holding facility, wherein the at least one item is picked from the at least one source container (320) to the holding facility (340) from which it is subsequently picked into a destination container (330), the source container (320) being configured for holding a plurality of items and for storage in a storage-and-retrieval system (40); and
- picking the at least one item from the holding facility (340) to a destination container (320); said method being **characterised in that** at least a portion of the holding facility is shared between multiple pick stations and **in that** said step of picking the at least one item from the holding facility (340) to a destination container (320) is performed by a robot from a second adjacent picking station (50, 100) that has access to said portion of the holding facility.

2. The method of claim 1, comprising:
picking a plurality of items from a plurality of source containers (320) to the holding facility (340); and
picking to the destination container (330) a plurality of ordered items in a defined sequence including at least one item from the holding facility (340) ;wherein the plurality of items picked from the at least one source container (320) to the holding facility (340) comprise a plurality of items for a destination container (330),
wherein the items from the plurality of source containers (320) are picked to the holding facility (340) while the destination container at the picking station is being replaced.

3. The method of claim 2, wherein the defined sequence is based on at least one characteristic associated with at least one of the ordered items to be picked to the destination container (330).

4. The method of claim 1, wherein the holding facility (340) comprises at least one storage apparatus for holding at least one item, and the at least one storage apparatus is accessible from a plurality of directions for picking to or from the at least one storage apparatus.

5. The method of any preceding claim, wherein the holding facility (340) comprises at least one storage apparatus for holding at least one item, and the at least one storage apparatus comprises at least one of a table, a set of shelving, and an array of apertures.

6. The method of any preceding claim, wherein the holding facility (340) comprises at least one of a rotating table, a sliding table, a moveable shelving, and a conveyor.

7. The method of any preceding claim, comprising: moving a second source container (320) into a position for picking into the holding facility (340) while at least one item is being picked from the holding facility (340) to the destination container (330).

8. The method of any preceding claim, comprising: moving a second destination container (330) into a position for picking from the holding facility (340) while at least one item is being picked from the source container (320) to the holding facility (340).

9. The method of any preceding claim, wherein at least one of the robots of the multiple picking stations is equipped with a plurality of grippers.

10. The method of claim 9, wherein at least two grippers in the plurality of grippers are configured to handle different types of items.

11. The method of claim 9 or 10, wherein at least one of the grippers is removeably interchangeable with a different type of gripper.

12. A system comprising multiple pick stations, from which one picking station (50, 100) comprises:
a holding facility (340), wherein at least a portion of the holding facility is configured to move dynamically;
a robot configured to pick items from a source container (320) to the holding facility (340) ; said system being **characterised in that**
at least a portion of the holding facility (340) is shared between the multiple pick stations and is accessible by a different robot from a second adjacent picking station (50, 100) of said multiple pick stations , said robot from the second adjacent picking station being configured to pick items from the holding facility (340) to a destination container (330).

13. The system of claim 12, wherein the holding facility (340) comprises at least one storage apparatus for holding at least one item.

14. An order fulfillment system (250) comprising:
a system comprising multiple pick stations according to claim 12 or 13 ;
a storage-and-retrieval system (40); and
at least one processor configured to generate instructions for or control the system according to claim 12 or 13 and the storage-and-retrieval system (40) to perform the method of any one of claims 1-11.

15. A non-transitory computer-readable medium or media having stored thereon computer-readable code which when executed by at least one processor of the order fulfillment system of claim 14 cause the at least one processor to generate instructions to perform the method of any one of claims 1-11.

## Patentansprüche

1. Verfahren zum Handhaben von Artikeln an einer ersten Entnahmestation (50, 100) in mindestens einem halbautomatischen Bestellabwicklungssystem (250), das eine Halteeinrichtung (340) umfasst, wobei mindestens ein Teil der Halteeinrichtung konfiguriert ist, um sich dynamisch zu bewegen, wobei die erste Entnahmestation einen Roboter umfasst, der konfiguriert ist, um Artikel aus einem Ausgangsbehälter (320) in die Halteeinrichtung (340) zu Entnehmen und Artikel aus der Halteeinrichtung (340) in einen Zielbehälter (330) zu entnehmen, wobei das Verfahren mindestens die folgenden Schritte umfasst:
- Entnehmen durch den Roboter der ersten Entnahmestation mindestens eines Artikels aus mindestens einem Ausgangsbehälter (320) in die Halteeinrichtung, wobei der mindestens eine Artikel aus dem mindestens einen Ausgangsbehälter (320) in die Halteeinrichtung (340) entnommen wird, aus der er anschließend in einen Zielbehälter (330) entnommen wird, wobei der Ausgangsbehälter (320) zum Halten einer Vielzahl von Artikeln und zum Lagern in einem Lager- und Entnahmesystem (40) konfiguriert ist; und
- Entnehmen des mindestens einen Artikels aus der Halteeinrichtung (340) in einen Zielbehälter (320); wobei das Verfahren **dadurch gekennzeichnet ist, dass** mindestens ein Teil der Halteeinrichtung von mehreren Entnahmestationen gemeinsam genutzt wird, und dadurch, dass der Schritt des Entnehmens des mindestens einen Artikels aus der Halteeinrichtung (340) in einen Zielbehälter (320) durch einen Roboter von einer zweiten benachbarten Entnahmestation (50, 100) durchgeführt wird, die Zugriff auf den Teil der Halteeinrichtung hat.

2. Verfahren nach Anspruch 1, umfassend:
Entnehmen einer Vielzahl von Artikeln aus einer Vielzahl von Ausgangsbehältern (320) in die Halteeinrichtung (340); und Entnehmen einer Vielzahl bestellter Artikel in den Zielbehälter (330) in einer definierten Reihenfolge, die mindestens einen Artikel von der Halteeinrichtung (340) umfasst; wobei die Vielzahl von Artikeln, die aus dem mindestens einen Ausgangsbehälter (320) in die Halteeinrichtung (340) entnommen werden, eine Vielzahl von Artikeln für einen Zielbehälter (330) umfasst, wobei die Artikel aus der Vielzahl von Ausgangsbehältern (320) in die Halteeinrichtung (340) entnommen werden, während der Zielbehälter an der Entnahmestation ersetzt wird.

3. Verfahren nach Anspruch 2, wobei die definierte Reihenfolge auf mindestens einem Merkmal basiert, das mindestens einem der bestellten Artikel zugeordnet ist, die in den Zielbehälter (330) entnommen werden sollen.

4. Verfahren nach Anspruch 1, wobei die Halteeinrichtung (340) mindestens eine Lagervorrichtung zum Halten mindestens eines Artikels umfasst und die mindestens eine Lagervorrichtung aus einer Vielzahl von Richtungen zum Entnehmen in die oder aus der mindestens einen Lagervorrichtung zugänglich ist.

5. Verfahren nach einem der vorhergehenden Ansprüche, wobei die Halteeinrichtung (340) mindestens eine Lagervorrichtung zum Halten mindestens eines Artikels umfasst und die mindestens eine Lagervorrichtung mindestens eines von einem Tisch, einem Satz von Regalen und einer Anordnung von Öffnungen umfasst.

6. Verfahren nach einem der vorhergehenden Ansprüche, wobei die Halteeinrichtung (340) mindestens eines von einem Drehtisch, einem Schiebetisch, einem beweglichen Regal und einem Förderer umfasst.

7. Verfahren nach einem der vorhergehenden Ansprüche, umfassend:
Bewegen eines zweiten Ausgangsbehälters (320) in eine Position zum Entnehmen in die Halteeinrichtung (340), während mindestens ein Artikel aus der Halteeinrichtung (340) in den Zielbehälter (330) entnommen wird.

8. Verfahren nach einem der vorhergehenden Ansprüche, umfassend:
Bewegen eines zweiten Zielbehälters (330) in eine Position zum Entnehmen aus der Halteeinrichtung (340), während mindestens ein Artikel aus dem Ausgangsbehälter (320) in die Halteeinrichtung (340) entnommen wird.

9. Verfahren nach einem der vorhergehenden Ansprüche, wobei mindestens einer der Roboter der mehreren Entnahmestationen mit einer Vielzahl von Greifern ausgestattet ist.

10. Verfahren nach Anspruch 9, wobei mindestens zwei Greifer in der Vielzahl von Greifern konfiguriert sind, um verschiedene Arten von Artikeln zu handhaben.

11. Verfahren nach einem der Ansprüche 9 oder 10, wobei mindestens einer der Greifer mit einer anderen Art von Greifer entfernbar austauschbar ist.

12. System, umfassend mehrere Entnahmestationen, von denen eine Entnahmestation (50, 100) umfasst:
eine Halteeinrichtung (340), wobei mindestens ein Teil der Halteeinrichtung konfiguriert ist, um sich dynamisch zu bewegen;
einen Roboter, der konfiguriert ist, um Artikel aus einem Ausgangsbehälter (320) in die Halteeinrichtung (340) zu entnehmen;
wobei das System **dadurch gekennzeichnet ist, dass** mindestens ein Teil der Halteeinrichtung (340) von den mehreren Entnahmestationen gemeinsam genutzt wird und durch einen anderen Roboter von einer zweiten benachbarten Entnahmestation (50, 100) der mehreren Entnahmestationen zugänglich ist, wobei der Roboter von der zweiten benachbarten Entnahmestation konfiguriert ist, um Artikel aus der Halteeinrichtung (340) in einen Zielbehälter (330) zu Entnehmen.

13. System nach Anspruch 12, wobei die Halteeinrichtung (340) mindestens eine Lagervorrichtung zum Halten mindestens eines Artikels umfasst.

14. Bestellabwicklungssystem (250), umfassend:
ein System, das mehrere Entnahmestationen nach einem der Ansprüche 12 oder 13 umfasst;
ein Lager- und Entnahmesystem (40); und
mindestens einen Prozessor, der konfiguriert ist, um Anweisungen für das System nach einem der Ansprüche 12 oder 13 und das Lager- und Entnahmesystem (40) zu erzeugen oder das System nach einem der Ansprüche 12 oder 13 und das Lager- und Entnahmesystem (40) zu steuern, um das Verfahren nach einem der Ansprüche 1 - 11 durchzuführen.

15. Nichtflüchtiges computerlesbares Medium oder nichtflüchtige computerlesbare Medien, auf denen computerlesbarer Code gespeichert ist, der bei Ausführung durch mindestens einen Prozessor des Bestellabwicklungssystems nach Anspruch 14 den mindestens einen Prozessor veranlasst, Anweisungen zu erzeugen, um das Verfahren nach einem der Ansprüche 1 - 11 durchzuführen.

## Revendications

1. Procédé de manipulation d'articles, au niveau d'un premier poste de prélèvement (50, 100), dans au moins un système d'exécution de commande semi-automatisé (250) comprenant une installation d'entreposage (340), dans lequel au moins une partie de l'installation d'entreposage est configurée pour se déplacer de manière dynamique, ledit premier poste de prélèvement comprenant un robot configuré pour prélever des articles à partir d'un contenant source (320) vers l'installation d'entreposage (340) et pour prélever des articles à partir de l'installation d'entreposage (340) vers un contenant de destination (330), le procédé comprenant au moins les étapes consistant à :
- prélever par l'intermédiaire du robot dudit premier poste de prélèvement au moins un article à partir d'au moins un contenant source (320) vers l'installation d'entreposage, dans lequel le au moins un article est prélevé à partir du au moins un contenant source (320) vers l'installation d'entreposage (340) à partir de laquelle il est ensuite prélevé jusque dans un contenant de destination (330), le contenant source (320) étant configuré pour entreposer une pluralité d'articles et pour un stockage dans un système de stockage et de récupération (40) ; et
- prélever le au moins un article à partir de l'installation d'entreposage (340) vers un contenant de destination (320) ; ledit procédé étant **caractérisé en ce qu'**au moins une partie de l'installation d'entreposage est partagée entre de multiples postes de prélèvement et **en ce que** ladite étape de prélèvement du au moins un article à partir de l'installation d'entreposage (340) vers un contenant de destination (320) est effectuée par un robot à partir d'un second poste de prélèvement adjacent (50, 100) qui a accès à ladite partie de l'installation d'entreposage.

2. Procédé selon la revendication 1, comprenant en outre les étapes consistant à :
prélever une pluralité d'articles à partir d'une pluralité de contenants sources (320) vers l'installation d'entreposage (340) ; et
prélever vers le contenant de destination (330) une pluralité d'articles commandés selon une séquence définie incluant au moins un article provenant de l'installation d'entreposage (340) ; dans lequel la pluralité d'articles prélevés à partir du au moins un contenant source (320) vers l'installation d'entreposage (340) comprend une pluralité d'articles pour un contenant de destination (330),
dans lequel les articles provenant de la pluralité de contenants sources (320) sont prélevés vers l'installation d'entreposage (340) pendant que le contenant de destination au niveau du poste de prélèvement est remplacé.

3. Procédé selon la revendication 2, dans lequel la séquence définie est basée sur au moins une caractéristique associée à au moins un des articles commandés à prélever vers le contenant de destination (330).

4. Procédé selon la revendication 1, dans lequel l'installation d'entreposage (340) comprend au moins un appareil de stockage pour entreposer au moins un article, et le au moins un appareil de stockage est accessible à partir d'une pluralité de directions pour un prélèvement vers ou depuis le au moins un appareil de stockage.

5. Procédé selon l'une quelconque des revendications précédentes, dans lequel l'installation d'entreposage (340) comprend au moins un appareil de stockage pour entreposer au moins un article, et le au moins un appareil de stockage comprend au moins un parmi une table, un ensemble d'étagères et un réseau d'ouvertures.

6. Procédé selon l'une quelconque des revendications précédentes, dans lequel l'installation d'entreposage (340) comprend au moins un parmi une table rotative, une table coulissante, une étagère mobile et un dispositif de transport.

7. Procédé selon l'une quelconque des revendications précédentes, comprenant les étapes consistant à : déplacer un second contenant source (320) jusque dans une position de prélèvement dans l'installation d'entreposage (340) pendant qu'au moins un article est prélevé à partir de l'installation d'entreposage (340) vers le contenant de destination (330).

8. Procédé selon l'une quelconque des revendications précédentes, comprenant les étapes consistant à : déplacer un second contenant de destination (330) jusque dans une position de prélèvement à partir de l'installation d'entreposage (340) pendant qu'au moins un article est prélevé à partir du contenant source (320) vers l'installation d'entreposage (340).

9. Procédé selon l'une quelconque des revendications précédentes, dans lequel au moins l'un des robots des multiples postes de prélèvement est équipé d'une pluralité de pinces.

10. Procédé selon la revendication 9, dans lequel au moins deux pinces de la pluralité de pinces sont configurées pour manipuler différents types d'articles.

11. Procédé selon la revendication 9 ou 10, dans lequel au moins l'une des pinces est interchangeable de manière amovible avec un type de pince différent.

12. Système comprenant plusieurs postes de prélèvement, parmi lesquels un poste de prélèvement (50, 100) comprend :
une installation d'entreposage (340), dans lequel au moins une partie de l'installation d'entreposage est configurée pour se déplacer de manière dynamique ;
un robot configuré pour prélever des articles à partir d'un contenant source (320) vers l'installation d'entreposage (340) ; ledit système étant **caractérisé en ce que**
au moins une partie de l'installation d'entreposage (340) est partagée entre les multiples postes de prélèvement et est accessible à un robot différent d'un second poste de prélèvement adjacent (50, 100) desdits multiples postes de prélèvement, ledit robot dudit second poste de prélèvement adjacent étant configuré pour prélever des articles à partir de l'installation d'entreposage (340) vers un contenant de destination (330).

13. Système selon la revendication 12, dans lequel l'installation d'entreposage (340) comprend au moins un appareil de stockage pour entreposer au moins un article.

14. Système d'exécution de commande (250), comprenant :
un système comprenant de multiples postes de prélèvement selon la revendication 12 ou 13 ;
un système de stockage et de récupération (40) ; et
au moins un processeur configuré pour générer des instructions à l'attention du système selon la revendication 12 ou 13 et du système de stockage et de récupération (40) ou pour les commander afin de mettre en oeuvre le procédé selon l'une quelconque des revendications 1 à 11.

15. Support(s) non transitoire(s) lisible(s) par ordinateur sur lequel ou lesquels est stocké un code lisible par ordinateur qui, lorsqu'il est exécuté par au moins un processeur du système d'exécution de commande selon la revendication 14, amène l'au moins un processeur à générer des instructions pour exécuter le procédé selon l'une quelconque des revendications 1 à 11.
